# EUROPÄISCHE PATENTSCHRIFT

(11) **EP 1 619 088 B1**
(45) Veröffentlichungstag und Bekanntmachung des Hinweises auf die Patenterteilung: **15.10.2008**
(21) Anmeldenummer: 05015712.2
(22) Anmeldetag: 20.07.2005
(51) Int. Cl.: B60R 21/34

(54) **Vorderbau einer Karosserie für ein Kraftfahrzeug**
Front structure of a vehicle body
Façade avant de véhicule automobile

(30) Priorität: 21.07.2004 DE 102004035422
(43) Veröffentlichungstag der Anmeldung: 25.01.2006
(73) Patentinhaber: GM Global Technology Operations, Inc., Detroit, MI 48265-3000 (US)
(72) Erfinder: Kerkeling, Christoph, 55118 Mainz (DE)
(74) Vertreter: Daniel, Ulrich W.P.

(56) Entgegenhaltungen:
- DE-A1- 19 853 340
- PATENT ABSTRACTS OF JAPAN Bd. 2002, Nr. 06, 4. Juni 2002 (2002-06-04) -& JP 2002 046650 A (MAZDA MOTOR CORP), 12. Februar 2002 (2002-02-12)
- PATENT ABSTRACTS OF JAPAN Bd. 2000, Nr. 07, 29. September 2000 (2000-09-29) & JP 2000 108840 A (MAZDA MOTOR CORP), 18. April 2000 (2000-04-18)

## Beschreibung

Die Erfindung betrifft einen Vorderbau Vörderbau einer Karosserie für ein Kraftfahrzeug mit einem in der vorgesehenen Fahrtrichtung gesehen vorderen Kotflügel, mit einem Karosserieteil zur Halterung des Kotflügels und mit einer an den Kotflügel angrenzenden, in vertikaler Richtung nachgiebig ausgebildeten Haube, wobei eine Blende zwischen dem Kotflügel und der Haube angeordnet ist und dass die Blende nachgiebig gestaltet ist.

Die JP 2002 046 650 A offenbart einen solchen Vorderbau. Bei diesem Vorderbau ist die Blende im Querschnitt winkelförmig gestaltet und hat eine an den Kotflügel angrenzende Kante. An dieser Stelle führt die Blende zu einer hohen Versteifung des Vorderbaus.

Vorderbauten von Kraftfahrzeugen, bei denen die Haube nachgiebig gestaltet ist, werden häufig zum Schutz von Fußgängern bei einem Kopfaufprall eingesetzt. Bei dem Aufprall des Fußgängers auf die Haube gibt diese nach und vermindert damit die auf den Kopf einwirkende Belastung. Die Nachgiebigkeit der Hauben, welche maßgeblich für vorgesehene Verzögerungswerte beim Aufprall des Kopfes des Fußgängers ist, wird beispielsweise durch entsprechende, leicht verformbare Haubenscharniere oder durch eine entsprechende konstruktive Gestaltung der Haube erreicht. Weiterhin weist die Haube einen Abstand zu einer unterhalb der Haube angeordneten Brennkraftmaschine auf. Bei einem Aufprall des Fußgängers in dem Bereich der Haube nahe an dem Kotflügel besteht jedoch die Gefahr der Verletzung an dem Kotflügel.

Daher ist aus der DE 29 34 060 A1 bereits ein Vorderbau bekannt, bei dem die Haube und die diese umrahmenden Karosserieteile, wie beispielsweise die Kotflügel, über bleibend verformare Deformationsglieder an Versteifungsstellen der Karosserie abgestützt sind. Die konkrete Ausführung dieses Vorderbaus besteht aus einem halbkreisförmig gebogenen Blech zwischen der inneren Kante der Außenhaut des Kotflügels und dem darunter liegenden Karosserieteil. Dasselbe gilt für die dem Kotflügel gegenüberliegende Kante der Fronthaube. Schlägt der Kopf eines Fußgängers in diesem Bereich auf, nehmen die Deformationsglieder die Stoßenergie auf, wodurch der Kopfaufprall relativ weich erfolgen soll.

Nachteilig bei dem bekannten Vorderbau ist jedoch, dass sich die Deformationsglieder nur sehr schwierig für die Fälle eines Aufpralls des Kopfes ausschließlich auf die Haube oder eines Aufpralls auf die Haube nahe des Kotflügels auf die vorgesehene Nachgiebigkeit einstellen lassen. Dies führt insbesondere bei einem Kopfaufprall auf die Haube nahe des meist sehr schmalen Kotflügels dazu, dass beim Niederdrücken der Haube eine daran angrenzende Kante des Kotflügels stehen bleibt und Ursache für Kopfverletzungen sein kann.

Weiterhin ist ein solcher Vorderbau aus der WO 01/28821 A1 bekannt. Bei diesem Vorderbau ist die Haube ebenfalls in vertikaler Richtung nachgiebig gehalten. Die Anbindung des Kotflügels an das Karosserieteil weist einen von dem Karosserieteil bis zu dem Kotflügel schräg nach außen verlaufenden Halter auf. Hierdurch ragt ein inneres Ende des Kotflügels in Richtung auf die Fronthaube frei über den Halter hinaus und kann daher bei einem Kopfaufprall leicht nachgeben. Alternativ ist aus der WO 01/28821 A1 bekannt, den Halter mit einer Rampe auszustatten, welche in der Bewegungsbahn der Haube bei einem Kopfaufprall befindet. Bei einem Kopfaufprall gleitet die Haube an der Rampe entlang und drückt den Kotflügel nach außen. Hierdurch wird das Verletzungsrisiko eines Fußgängers bei einem Kopfaufprall auf die Haube, insbesondere im an den Kotflügel angrenzenden Bereich im Vergleich zu einer steifen Anbindung des Kotflügels an das Karosserieteil gering gehalten. Jedoch erfordert der Kotflügel zur Abstützung von Betriebskräften eine ausreichende Eigensteifigkeit, wodurch die Verzögerung beim Kopfaufprall begrenzt ist. Die vorgesehene Einstellung der Steifheit des Halteteils und des Kotflügels gestaltet sich daher sehr aufwändig.

Der Erfindung liegt das Problem zugrunde, einen Vorderbau der eingangs genannten Art so weiterzubilden, dass vorgesehene Verzögerungswerte bei einem Kopfaufprall weiter verbessert werden und mit besonders geringem Aufwand einfach einstellbar sind.

Dieses Problem wird erfindungsgemäß dadurch gelöst, dass der Kotflügel in einem aneinander stoßenden Abschnitt des oberen Schenkels und einem die Außenhaut der Karosserie bildenden äußeren, seitlichen Schenkel eine Vertiefung zur Aufnahme eines Randes der Blende hat und dass die Blende lang gestreckt ausgebildet ist und dass Befestigungselemente zur Anbindung der Blende an angrenzenden Bereichen der Karosserie außerhalb eines für einen Kopfaufprall eines Fußgängers berechneten Bereichs angeordnet sind.

Durch diese Gestaltung grenzt die von dem Kotflügel getrennte Blende an die Haube an. Die Blende lässt sich im Gegensatz zu dem Kotflügel mit einer wesentlich geringeren Steifheit fertigen, da an dem unmittelbar an die Haube angrenzenden Bereich des Vorderbaus nur geringe Betriebskräfte abzustützen sind. Die Blende lässt sich damit als Dämpfungskörper ausbilden, so dass ein Kopfaufprall gedämpft wird. Hierdurch lassen sich die vorgesehenen geringen Verzögerungswerte mit besonders geringem konstruktiven Aufwand einfach einstellen. Befestigungelemente zur Befestigung der Blende an den übrigen Bauteilen des erfindungsgemäßen Vorderbaus können zu einer Versteifung der Blende und damit zu einer Erhöhung des Verletzungsrisikos bei einem Kopfaufprall führen. Zur weiteren Verminderung des Verletzungsrisikos bei einem Kopfaufprall trägt es bei, weil die Blende lang gestreckt ausgebildet ist und Befestigungselemente zur Anbindung der Blende an angrenzenden Bereichen der Karosserie außerhalb eines für einen Kopfaufprall eines Fußgängers berechneten Bereichs angeordnet sind. Daher führt eine Viersteifung der Blende durch die Befestigungselemente nicht zu einer Erhöhung der Verletzungsgefahr. Vorzugsweise sind die Befestigungselemente an den Enden der Blende angeordnet. Die Blende vermag im Normalbetrieb des Kraftfahrzeuges auftretende Betriebskräfte abzustützen, ohne dabei aus ihrer Position heraus bewegt zu werden, weil der Kotflügel in einem aneinander stoßenden Abschnitt des oberen Schenkels und einem die Außenhaut der Karosserie bildenden äußeren seitlichen Schenkel eine Vertiefung zur Aufnahme eines Randes der Blende hat.

Der erfindungsgemäße Vorderbau gestaltet sich konstruktiv besonders einfach, wenn ein oberer Schenkel des Kotflügels tiefer angeordnet ist als die Oberkante der Haube und wenn die Blende oberhalb des oberen Schenkels des Kotflügels angeordnet ist. Durch diese Gestaltung lässt sich der gesamte Raum zwischen der Oberseite der Blende und dem oberen Schenkel des Kotflügels zum Abbau der Aufprallenergie beim Kopfaufprall nutzen. Der Abbau der Aufprallenergie durch die Blende erfolgt unabhängig von der Stabilität des Kotflügels, da der obere Schenkel die Oberkante des Kotflügels darstellt und ein auf den Vorderbau aufprallender Fußgänger ausschließlich in Kontakt mit der Haube oder der Blende gelangen kann. Zudem wird durch diese Gestaltung vermieden, dass beim Niederdrücken der Haube eine scharfe Kante des Kotflügels in dem Aufprallbereich hervorsteht. Dank der Erfindung hat der Kotflügel in seinem an die Haube angrenzenden Bereich keine Abkantung.

Zur weiteren Verringerung der Verletzungsgefahr beim Fußgängeraufprall trägt es gemäß einer anderen vorteilhaften Weiterbildung der Erfindung bei, wenn die Blende aus Kunststoff gefertigt ist. Eine solche Fertigung der Blende ermöglicht bei besonders geringen Herstellungskosten eine besonders einfache Einstellbarkeit der Steifheit der Blende. Zudem ermöglicht die Fertigung der Blende aus Kunststoff eine große Deformation unter statischen Lasten, beispielsweise beim Aufstützen auf die Blende, ohne jedoch bleibende plastische Verformungen hervorzurufen. Im einfachsten Fall ist die Blende aufgebaut, wie es von aus Kunststoff gefertigten Stoßfängern heutiger Kraftfahrzeuge bekannt ist. Beispielsweise kann die Blende eine Schaumstofffüllung oder eine gitterartige Unterstruktur aufweisen und zumindest teilweise kostengünstig im Spritzgussverfahren gefertigt werden.

Die Blende könnte beispielsweise an der Haube befestigt werden. Eine Verformung der Blende unabhängig von der Haube lässt sich jedoch gemäß einer anderen vorteilhaften Weiterbildung der Erfindung erzeugen, wenn die Blende an einem feststehenden Bauteil der Karosserie befestigt ist. Vorzugsweise wird die Blende an dem Kotflügel oder dem Längsträger befestigt.

Zur weiteren Vergrößerung des von der Blende einnehmbaren Verformungsraumes trägt es gemäß einer anderen vorteilhaften Weiterbildung der Erfindung bei, wenn der obere Schenkel des Kotflügels einen im Wesentlichen horizontalen Abschnitt aufweist.

Die Montage des erfindungsgemäßen Vorderbaus gestaltet sich konstruktiv besonders einfach, wenn der obere Schenkel des Kotflügels einen Flansch aufweist, mit dem er an einem Karosserieteil der Karosserie befestigt ist. Durch diese Gestaltung kann zudem auf die Anordnung eines Wasserkanals an der Befestigung des Kotflügels verzichtet werden. Vorzugsweise ist das Karosserieteil zur Halterung des Kotflügels ein Längsträger.

Zur weiteren Verringerung der Verletzungsgefahr beim Kopfaufprall trägt es jedoch gemäß einer anderen vorteilhaften Weiterbildung der Erfindung bei, wenn die Blende eine von der Haube aus gesehen bis zu der Vertiefung des Kotflügels abfallende Kontur hat. Die Blende wird im Normalbetrieb des Kraftfahrzeuges in der Vertiefung abgestützt oder beispielsweise durch Fahrtwind mit ihrem Rand in die Vertiefung hineingedrückt. Bei einem Kopfaufprall kann jedoch, bedingt durch die Kontur der Blende, der in der Vertiefung angeordnete Rand der Blende aus der Vertiefung herausgleiten. Anschließend kann die Aufprallenergie durch das Material und die Form der Blende abgebaut werden.

Ein Hervorstehen einer scharfen Kante der Blende beim Niederdrücken der Haube lässt sich gemäß einer anderen vorteilhaften Weiterbildung der Erfindung einfach vermeiden, wenn die Blende an ihrem an die Haube angrenzenden Bereich eine in Bewegungsrichtung der Haube bei einem Kopfaufprall weisende Schürze hat.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: eine perspektivische Darstellung eines Kraftfahrzeuges mit einem erfindungsgemäßen Vorderbau,
- Fig. 2: schematisch eine Schnittdarstellung durch einen Teilbereich des erfindungsgemäßen Vorderbaus aus Figur 1 entlang der Linie II - II,
- Fig. 3: schematisch eine Schnittdarstellung durch einen Teilbereich des erfindungsgemäßen Vorderbaus aus Figur 1 entlang der Linie III - III,
- Fig. 4: der Teilbereich des erfindungsgemäßen Vorderbaus aus Figur 3 bei einem Kopfaufprall.

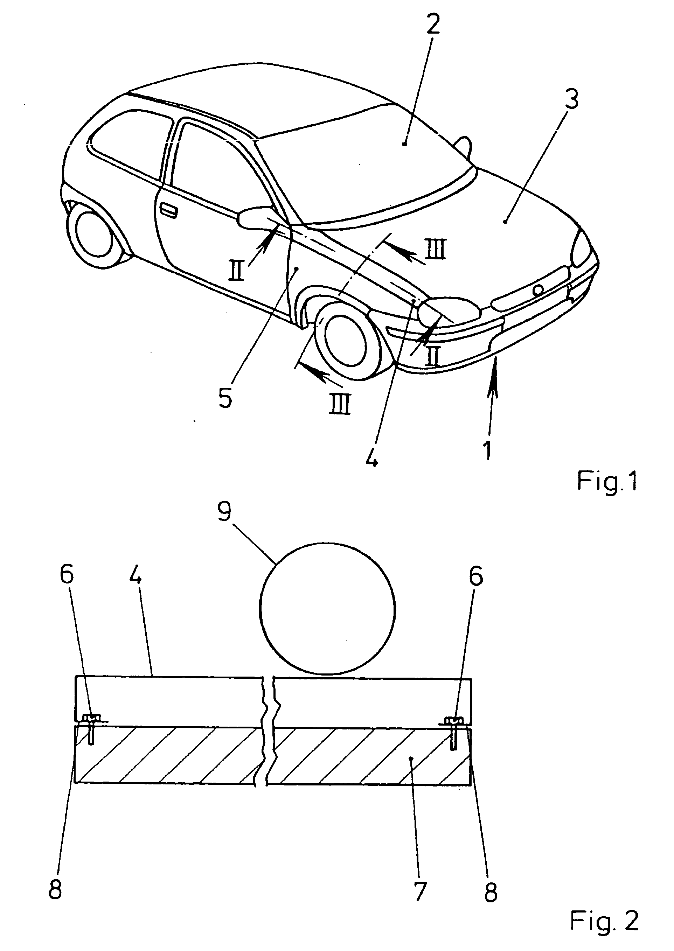

Figur 1 zeigt ein Kraftfahrzeug mit einem Vorderbau 1 und einer sich an den Vorderbau 1 anschließende Frontscheibe 2. Der Vorderbau 1 hat eine schwenkbar gelagerte Haube 3. Seitlich neben der Haube 3 ist eine Blende 4 aus Kunststoff angeordnet. Diese Blende 4 überdeckt einen darunter befindlichen Kotflügel 5. Die Haube 3 und die Blende 4 sind in vertikaler Richtung nachgiebig gestaltet und absorbieren bei einem Aufprall eines Fußgängers entstehende Aufprallenergie.

Figur 2 zeigt in einer Schnittdarstellung in Längsrichtung durch den Vorderbau 1 aus Figur 1 entlang der Linie II - II, dass die Blende 4 mittels zweier als Schrauben ausgebildeter Befestigungselemente 6 an einem Karosserieteil 7 befestigt ist. Die Befestigungselemente 6 sind ausschließlich an den Enden der Blende 4 angeordnet. Die Blende 4 hat zur Verbindung mit den Befestigungselementen 6 jeweils einen Befestigungsflansch 8. Damit sind die Befestigungselemente 6 außerhalb desjenigen Bereichs angeordnet, in welchem ein Aufprall eines Kopfes 9 eines Fußgängers bei einem Unfall zu erwarten ist. In Figur 2 ist der Kopf 9 des Fußgängers vor einem Aufprall schematisch dargestellt.

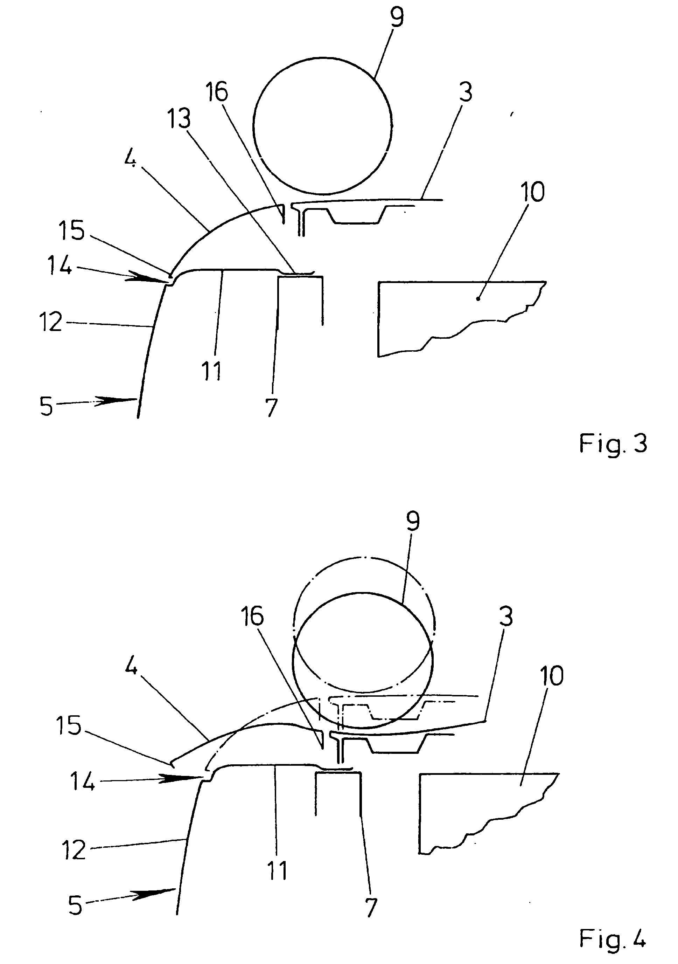

Figur 3 zeigt in einer Schnittdarstellung des Vorderbaus 1 des Kraftfahrzeuges aus Figur 1 entlang der Linie III - III die Blende 4 und daran angrenzende Bereiche der Haube 3 und des Kotflügels 5 im Grundzustand ohne Belastung. Unterhalb der Haube 3 ist eine in der Zeichnung schematisch dargestellte Brennkraftmaschine 10 angeordnet. Der Kotflügel 5 weist einen oberen, im Wesentlichen horizontal angeordneten Schenkel 11 und einen die Außenhaut des Kraftfahrzeuges bildenden seitlichen Schenkel 12 auf. Der seitliche Schenkel 12 verläuft im Wesentlichen vertikal. Der horizontale Schenkel 11 weist an seinem dem seitlichen Schenkel 12 abgewandten Ende einen Flansch 13 auf, mit dem er an dem Karosserieteil 7 befestigt ist. Bei dem Karosserieteil 7 kann es sich beispielsweise um einen Längsträger handeln. Die Schenkel 11, 12 des Kotflügels 5 weisen an ihren aneinandergrenzenden Bereichen eine Vertiefung 14 auf, in die ein Rand 15 der Blende 4 eindringt. Das von der Vertiefung 14 abgewandte Ende des Kotflügels 5 hat eine vertikal nach unten weisende Schürze 16.

Der Vorderbau 1 aus Figur 3 bei einem Aufprall des Kopfes 9 eines Fußgängers auf die Haube 3 nahe der Blende 4 ist in Figur 4 dargestellt. Deutlich ist zu erkennen, dass die Brennkraftmaschine 10 einen Abstand zu der Unterseite der Haube 3 hat, so dass sich die Haube 3 bei einem Aufprall des Kopfes 9 des Fußgängers in vertikaler Richtung nach unten bewegen oder verformen kann, ohne von der Brennkraftmaschine 10 abgestützt zu werden. Weiterhin verformt sich die Blende 4. Dabei gelangt der im Grundzustand in der Vertiefung 14 des Kotflügels 5 gehaltene Rand 15 der Blende 4 aus der Vertiefung 14 heraus. Die Blende 4 bewegt sich bei ihrer Verformung auf den Kotflügel 5 zu. Hierbei wird die Bewegungsenergie des Kopfes 9 entsprechend der Steifheit der Blende 4 und der Nachgiebigkeit der Haube 3 abgebaut und damit die Bewegung des Kopfes 9 verzögert. Zur Verdeutlichung ist in der Zeichnung der unbelastete Grundzustand des Vorderbaus 1 strichpunktiert dargestellt.

### Bezugszeichenliste

- 1: Vorderbau
- 2: Frontscheibe
- 3: Haube
- 4: Blende
- 5: Kotflügel

- 6: Befestigungselement
- 7: Karosserieteil
- 8: Befestigungsflansch
- 9: Kopf
- 10: Brennkraftmaschine

- 11, 12: Schenkel
- 13: Flansch
- 14: Vertiefung
- 15: Rand
- 16: Schürze

## Patentansprüche

1. Vorderbau (1) einer Karosserie für ein Kraftfahrzeug mit einem in der vorgesehenen Fahrtrichtung gesehen vorderen Kotflügel (5), mit einem Karosserieteil (7) zur Halterung des Kotflügels (5) und mit einer an den Kotflügel (5) angrenzenden, in vertikaler Richtung nachgiebig ausgebildeten Haube (3), wobei eine Blende (4) zwischen dem Kotflügel (5) und der Haube (3) angeordnet ist und dass die Blende (4) nachgiebig gestaltet ist **dadurch gekennzeichnet, dass** der Kotflügel (5) in einem aneinander stoßenden Abschnitt des oberen Schenkels (11) und einem die Außenhaut der Karosserie bildenden äußeren, seitlichen Schenkel (12) eine Vertiefung (14) zur Aufnahme eines Randes (15) der Blende (4) hat und dass die Blende (4) langgestreckt ausgebildet ist und dass Befestigungselemente (6) zur Anbindung der Blende (4) an angrenzenden Bereichen der Karosserie außerhalb eines für einen Kopfaufprall eines Fußgängers berechneten Bereichs angeordnet sind.

2. Vorderbau nach Anspruch 1, **dadurch gekennzeichnet, dass** ein oberer Schenkel (11) des Kotflügels (5) tiefer angeordnet ist als die Oberkante der Haube (3) und dass die Blende (4) oberhalb des oberen Schenkels (11) des Kotflügels (5) angeordnet ist.

3. Vorderbau nach Anspruch 1 oder 2, **dadurch gekennzeichnet, dass** die Blende (4) aus Kunststoff gefertigt ist.

4. Vorderbau nach zumindest einem der vorhergehenden Ansprüche, **dadurch gekennzeichnet, dass** die Blende (4) an einem feststehenden Bauteil der Karosserie befestigt ist.

5. Vorderbau nach Anspruch 1, **dadurch gekennzeichnet, dass** die Befestigungselemente (6) an den Enden der Blende (4) angeordnet sind.

6. Vorderbau nach zumindest einem der vorhergehenden Ansprüche, **dadurch gekennzeichnet, dass** der obere Schenkel (11) des Kotflügels (5) einen im Wesentlichen horizontalen Abschnitt aufweist.

7. Vorderbau nach zumindest einem der vorhergehenden Ansprüche, **dadurch gekennzeichnet, dass** der obere Schenkel (11) des Kotflügels (5) einen Flansch (13) aufweist, mit dem er an einem Karosserieteil (7) der Karosserie befestigt ist.

8. Vorderbau nach Anspruch 1, **dadurch gekennzeichnet, dass** die Blende (4) eine von der Haube (3) aus gesehen bis zu der Vertiefung (14) des Kotflügels (5) abfallende Kontur hat.

9. Vorderbau nach zumindest einem der vorhergehenden Ansprüche, **dadurch gekennzeichnet, dass** die Blende (4) an ihrem an die Haube (3) angrenzenden Bereich eine in Bewegungsrichtung der Haube (3) bei einem Kopfaufprall weisende Schürze (16) hat.

## Claims

1. Front structure (1) of a vehicle body for a motor vehicle equipped with a frontal fender (5) if you consider it from the designated driving direction, equipped with a component of the vehicle body (7) designated to support the fender (5), and with a hood (3) bordering the fender (5) and having a flexible construction towards the vertical direction, wherein a face plate (4), having a flexible construction is aligned between the fender (5) and the hood (3), **characterized in that** the fender (5) has a deepening (14) for the reception of a border (15) of the face plate (4) wherein this is put in a section of the upper axle stub (11) directly contiguous to the external lateral axle stub (12) forming the external part of the font structure and that the face plate (4) has an elongated structure and that the fastening components (6)which connect the face plate (4) with the contiguous parts of the front structure of the vehicle are aligned on the external part of a section calculated for the head impact of a foot passenger.

2. Front structure according to claim 1, **characterized in that** an upper axle stub (11) of the fender (5) is arranged at a lower position than the upper border of the hood (3) and that the face plate (4) is aligned over the upper axle stub (11) of the fender (5).

3. Front structure according to claim 1 or 2, **characterized in that** the face plate (4) is made of synthetic material.

4. Front structure according to one of the previous claims, **characterized in that** the face plate (4) is fastened on a fixed component of the front structure.

5. Front structure according to claim 1, **characterized in that** the fastening elements (6) are arranged on the ending parts of the face plate (4).

6. Front structure according to one of the previous claims, **characterized in that** the upper axle stub (11) of the fender (5) is essentially equipped with a horizontal section.

7. Front structure according to one of the previous claims, **characterized in that** the upper axle stub (11) of the fender (5) is equipped with a flange (13) by which it is fastened on a component of the front structure (7) of the vehicle.

8. Front structure according to claim 1, **characterized in that** the face plate (4) has a gradient outline reaching the deepening (14) of the fender (5) if it is considered from the hood (3).

9. Front structure according to one of the previous claims, **characterized in that** the face plate (4) in case of a head impact is equipped with a skirt (16) in its section contiguous to the hood (3) and oriented along the moving direction of the hood (3).

## Revendications

1. Façade avant (1) de véhicule automobile comportant dans le sens prévu de roulement, une aile (5) avant, avec une pièce de carrosserie (7) pour la fixation de l'aile (5) et un capot (3) adjacent à l'aile(5), et élastique dans le sens verticale, étant donné qu'une blende (4), formée de façon élastique, est disposée entre l'aile(5) et le capot (3), **caractérisée en ce que** l'aile(5) possède une concavité (14), dans une partie de rencontre entre le bord supérieur (11) et un bord latéral (12) externe, formant le bordé de la carrosserie, pour l'accueil d'un bord (15) de la blende (4) et que la blende (4) est réalisée en forme allongée et que des éléments de fixations (6) pour l'attachement de la blende, sont disposés au niveau des régions adjacentes à la carrosserie, en dehors d'une région calculée pour le choc de la tête d'un piétant.

2. Façade avant de véhicule automobile selon revendication 1, **caractérisée en ce que** un bord supérieur (11) de l'aile (5) est disposé plus bas par rapport au bord supérieur du capot (3) et que la blende (4) est arrangée à l'extérieur du bord supérieur (11) de l'aile (5).

3. Façade avant de véhicule automobile selon revendication 1 ou 2, **caractérisée en ce que** la blende (4) est réalisée en matière plastique.

4. Façade avant de véhicule automobile selon au moins l'une des revendications précédentes, **caractérisée en ce que** la blende (4) est fixée à une pièce fixe de carrosserie.

5. Façade avant de véhicule automobile selon revendication 1, **caractérisée en ce que** les éléments de fixation (6) sont arrangés au niveau des extrémités de la blende (4).

6. Façade avant de véhicule automobile selon au moins l'une des revendications précédentes, **caractérisée en ce que** le bord supérieur (11) de l'aile (5) présente une section essentiellement à forme horizontale.

7. Façade avant de véhicule automobile selon au moins l'une des revendications précédentes, **caractérisée en ce que** le bord supérieur (11) de l'aile (5) présente une bride (13), par le biais de laquelle, il est fixée à une pièce de carrosserie (7) .

8. Façade avant de véhicule automobile selon revendication 1, **caractérisée en ce que** la blende (4) possède un contour descendant du niveau haut du capot (3) jusqu' au niveau de la concavité (14) de l'aile (5).

9. Façade avant de véhicule automobile selon au moins l'une des revendications précédentes, **caractérisée en ce que** la blende (4) possède au niveau de sa région adjacente au capot (3), une bavette (16) expulsant dans le sens du mouvement du capot (3), au moment d'un choc de la tête .
